# DEMANDE DE BREVET EUROPEEN

(11) **EP 0 611 174 A1**
(43) Date de publication de la demande: **17.08.1994**
(21) Numéro de dépôt: 94400073.6
(22) Date de dépôt: 12.01.1994
(51) Int. Cl.: F16L 47/00, F16L 19/02, F16L 47/04

(54) **Dispositif de raccordement**

(30) Priorité: 13.01.1993 FR 9300224
(71) Demandeur: ELECTRICITE DE FRANCE, F-75008 Paris (FR)
(72) Inventeur: Regnier, Jean-Claude, F-89140 Vinneus (FR)
(74) Mandataire: Martin, Jean-Jacques

(57) **Abrégé**

Le dispositif de raccordement entre un premier embout tubulaire (1a) non métallique et un deuxième embout (1b) tubulaire métallique comporte un embout rapporté (2) sur l'embout tubulaire (1a), un écrou (3) et une pièce de raccord (4) avec le deuxième embout tubulaire (1b). Un joint d'étanchéité annulaire est interposé entre le collet (6) de l'embout rapporté (2) et la pièce de raccord (4).

## Description

La présente invention est relative à un dispositif de raccordement entre deux embouts tubulaires de tuyauteries et plus particulièrement à un dispositif pour le raccordement entre l'embout d'une tuyauterie en un matériau non métallique (composite ou plastique) et un embout en un matériau métallique.

A l'heure actuelle, certaines tuyauteries de circuits auxiliaires de centrales nucléaires sont conçues et réalisées en matériaux composites. Ces circuits sont équipés de robinets métalliques qui sont raccordés par un dispositif d'assemblage à brides aux tuyauteries. Ce type de raccordement convient pour les moyens et grands diamètres de tuyauteries, mais n'est pas adapté pour la petite robinetterie (diamètre interne inférieur à 32 mn).

Un but principal de l'invention est de pallier cet inconvénient.

On connait déjà par le document US 3 533 649 un dispositif de raccordement entre une tuyauterie métallique et une tuyauterie non métallique. Sa structure est éloignée de celle proposée par l'invention.

On connait en outre par le document US 5 033 435 une structure de raccordement comportant un embout rapporté sur l'une des tuyauteries et un écrou dont le filetage intérieur coopère avec un filetage extérieur porté par l'autre des tuyauteries, de façon à maintenir l'embout en appui sur la tranche de celle-ci.

Les deux tuyauteries raccordées sont en des matériaux similaires.

Il existe un jeu entre l'embout et l'écrou: les deux tuyauteries raccordées ne sont par conséquent pas nécessairement parfaitement alignées.

En outre, les structures proposées par US 3 533 649 et US 5 033 435 présentent des passages de fluide qui ne sont pas de section constante, de sorte qu'il existe des zones de rétention sur lesquelles les fluides chargés se déposent.

L'invention propose quant à elle un dispositif de raccordement entre un premier embout tubulaire en un matériau non métallique et un deuxième embout tubulaire en un matériau métallique, caractérisé en ce qu'il comporte, collé sur le premier embout, un embout rapporté qui comprend, d'une part, une partie manchon dont le diamètre intérieur correspond au diamètre extérieur du premier embout, et, d'autre part, un collet annulaire d'extrémité qui recouvre la tranche d'extrémité du premier embout et sur lequel ledit premier embout est en appui par cette tranche, un écrou étant passé sur le premier embout et l'embout rapporté, cet écrou comportant une partie manchon et deux parties d'extrémité, le diamètre intérieur de la partie manchon correspondant au diamètre extérieur de l'embout rapporté, une partie d'extrémité présentant un épaulement annulaire sur lequel la tranche de l'embout rapporté opposée à son collet vient en appui par l'intermédiaire d'une rondelle de frottement interposée, le diamètre intérieur de cet épaulement correspondant au diamètre extérieur du premier embout, l'autre partie d'extrémité de l'écrou présentant un filetage intérieur qui coopère avec le filetage extérieur d'une pièce de raccord, cette pièce de raccord étant tubulaire et prolongeant le deuxième embout, un joint d'étanchéité annulaire étant interposé entre la face extérieure du collet et la face en regard de la pièce de raccord.

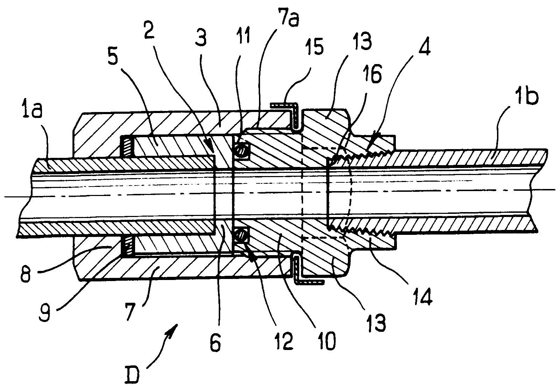

D'autres caractéristiques et avantages de l'invention ressortiront encore de la description qui suit d'un de ses modes de réalisation. Cette description est purement illustrative et non limitative. Elle doit être lue en regard de la figure unique annexée sur laquelle un dispositif de raccordement conforme à ce mode de réalisation particulier de l'invention a été représenté en coupe axiale.

Ainsi qu'on peut le voir sur cette figure, ce dispositif est référencé par D et permet le raccordement entre un embout de tuyauterie la en composite de fibres de verre et un embout de tube 1b métallique, qui est par exemple un embout de robinet. Ces deux embouts 1a et 1b ont même diamètre intérieur.

Ce dispositif D comporte principalement un embout 2 rapporté par collage sur l'embout la de tuyauterie, un écrou libre métallique 3 passé sur cet embout collé 2, et une pièce de raccord mâle métallique 4 prolongeant le tube métallique 1b.

L'embout 2 collé est réalisé par un enroulement filamentaire résine époxyde/fibres de verre.

Il comprend un manchon cylindrique 5 dont le diamètre intérieur correspond au diamètre extérieur de l'embout 1a et un collet d'extrémité 6 s'étendant annulairement vers l'intérieur du manchon 5. La face du collet 6 qui est dirigée vers l'intérieur du manchon sert de face d'appui pour le bord annulaire d'extrémité de l'embout 1.

L'écrou 3 réalisé en un métal, tel que l'aluminium.

Il est constitué par un manchon 7 dont le diamètre intérieur correspond au diamètre extérieur du manchon 5 et qui se termine à une de ses extrémités par un épaulement annulaire 8 s'étendant en saillie vers l'intérieur du manchon 7. Le diamètre annulaire intérieur de l'épaulement 8 correspond au diamètre extérieur de l'embout de la tuyauterie composite 1a.

A son autre extrémité, le manchon 7 est muni d'un filetage 7a intérieur destiné à coopérer avec le filetage extérieur de la pièce de raccord mâle 4. La face intérieure de l'épaulement 8 est espacée de la zone filetée 7a du manchon 7 d'une distance légèrement supérieure à la hauteur axiale de l'embout cylindrique collé 2.

Cet écrou 3 est monté libre en rotation sur l'embout de tuyauterie composite la et sur l'embout collé 2 qu'il entoure. L'extrémité de l'embout collé 2 qui est opposée au collet 6 vient en appui sur la face intérieure de l'épaulement 8 par l'intermédiaire d'une rondelle de frottement 9.

Cette rondelle de frottement 9 est en un TEFLON® chargé : CESTIDUR®. Cette rondelle 9 assure un bon contact de frottement tournant entre l'embout collé 2 et les faces intérieures de l'écrou 3.

La partie de la pièce de raccord 4 portant le filetage qui coopère avec le filetage complémentaire de l'écrou 3 a été référencée par 10. Cette partie 10 est en contact par une extrémité plate avec la face extérieure du collet 6. Une gorge annulaire 11 est ménagée sur la paroi plate de cette partie 10 en regard de la face extérieure du collet 6, pour recevoir un joint d'étanchéité 12 avec limiteur d'écrasement.

A son extrémité opposée, cette partie filetée est prolongée par un anneau de serrage 13 à géométrie extérieure hexagonale. Cet anneau de serrage 13 est prolongé du côté opposé à la partie 10 par un manchon 14 qui vient se fixer sur la tuyauterie métallique 1b. La tuyauterie métallique 1b est emboîtée dans ce manchon 14. Son extrémité annulaire vient en appui sur une butée 16 annulaire ménagée intérieurement sur la pièce de raccord 4, sensiblement au niveau de l'anneau de serrage 13. Le raccordement entre la tuyauterie 1b et le manchon 14 se fait soit par vissage, soit par soudage.

Le joint d'étanchéité 12 est un joint torique élastomère.

Entre le bord d'extrémité du manchon 7 qui est opposé à l'épaulement 8 et le bord en regard de l'anneau de serrage 13 est interposée une rondelle anti-desserrage 15. Cette rondelle 15 est réalisée à partir d'une feuille métallique. Elle permet d'empêcher le desserrage entre la pièce de raccord 4 et l'écrou 3.

Le montage de ce dispositif se fait de la façon suivante.

L'écrou 3 est initialement passé sur l'embout de tuyauterie composite 1. On introduit au fond de cet écrou 3 la rondelle de frottement 9. Puis l'on vient coller sur l'embout de la tuyauterie composite l'embout collé 2. La pièce de raccord 4 ayant été solidarisée de la tuyauterie 1b, et le joint d'étanchéité 12 ayant été introduit dans la gorge annulaire 11, l'on présente l'extrémité de la pièce de raccord 4 contre la surface extérieure du collet 6, puis l'on visse l'écrou libre 3 sur la partie 10 filetée de la pièce de raccord 4.

Un tel dispositif de raccordement permet un accouplement et un désaccouplement aisés des tuyauteries en matériau composite ou plastique par rapport à la robinetterie métallique dont elles sont équipées.

Le nombre de pièces de ce dispositif est peu important et ces pièces sont des pièces de révolution, simples à réaliser. Le prix de revient d'un tel dispositif est donc peu élevé.

Un tel dispositif permet également d'assurer un parfait alignement entre les tuyauteries à raccorder.

Il est d'un faible encombrement. Son poids n'induit pas de chargement mécanique sur les tuyauteries.

En outre, ce dispositif assure la continuité de la tuyauterie sans zones de rétention, de sorte que des fluides chargés peuvent y circuler sans s'y déposer.

Un tel dispositif est d'une maintenance aisée : elle se résume au changement de joints. Cette opération est envisageable d'une manière systématique à chaque démontage du raccord.

## Revendications

1. Dispositif de raccordement entre un premier embout tubulaire (1a) en un matériau non métallique et un deuxième embout (1b) tubulaire en un matériau métallique, caractérisé en ce qu'il comporte, collé sur le premier embout, un embout rapporté (2) qui comprend, d'une part, une partie manchon (5) dont le diamètre intérieur correspond au diamètre extérieur du premier embout, et, d'autre part, un collet annulaire (6) d'extrémité qui recouvre la tranche d'extrémité du premier embout (1a) et sur lequel le premier embout est en appui par cette tranche, un écrou (3) étant passé sur le premier embout (1a) et l'embout rapporté (2), cet écrou (3) comportant une partie manchon (7) et deux parties d'extrémité (8, 7a), le diamètre intérieur de la partie manchon (7) correspondant au diamètre extérieur de l'embout rapporté (2), une partie d'extrémité présentant un épaulement annulaire (8) sur lequel la tranche de l'embout rapporté (2) opposée à son collet (6) vient en appui par l'intermédiaire d'une rondelle de frottement (9) interposée, le diamètre intérieur de cet épaulement (8) correspondant au diamètre extérieur du premier embout (1a), l'autre partie d'extrémité (7a) de l'écrou (3) présentant un filetage intérieur qui coopère avec le filetage extérieur d'une pièce de raccord (4) cette pièce de raccord (4) étant tubulaire et prolongeant le deuxième embout (1b), un joint d'étanchéité annulaire (12) étant interposé entre la face extérieure du collet (6) et la face en regard de la pièce de raccord (4).

2. Dispositif selon la revendication 1, caractérisé en ce que le joint d'étanchéité (12) est reçu dans une gorge annulaire (11) ménagée sur la paroi de la pièce de raccord (4) qui est en regard du collet (6) de l'embout rapporté (2).

3. Dispositif selon l'une quelconque des revendications précédentes, caractérisé en ce que l'embout rapporté (2) est en un matériau non métallique.

4. Dispositif selon l'une quelconque des revendications précédentes, caractérisé en ce que les diamètres intérieurs du premier et du deuxième embouts (1a, 1b), de l'écrou (3) et du collet annulaire (6) de l'embout rapporté (2) sont identiques.

5. Dispositif selon l'une quelconque des revendications précédentes, caractérisé en ce que la pièce de raccord (4) est fixée sur le deuxième embout (1b) par soudage et/ou vissage.
